# EUROPÄISCHE PATENTANMELDUNG

(11) **EP 2 722 947 A1**
(43) Veröffentlichungstag der Anmeldung: **23.04.2014**
(21) Anmeldenummer: 13187770.6
(22) Anmeldetag: 08.10.2013
(51) Int. Cl.: H02B 1/56, H02B 13/025

(54) **Lüftungseinrichtung**

(30) Priorität: 16.10.2012 DE 102012218782
(71) Anmelder: Schneider Electric Industries SAS, 92500 Rueil-Malmaison (FR)
(72) Erfinder: Eiouadhane, Harethe, 93053 Regensburg (DE); Zimmerer, Rudolf, 93192 Wald (DE)
(74) Vertreter: Manitz, Finsterwald & Partner GbR

(57) **Zusammenfassung**

Eine Lüftungseinrichtung (11) umfasst eine durch einen Rahmen (13) definierte Durchströmöffnung, die einen Gefährdungsbereich mit einem Sicherungsbereich verbindet, sowie ein erstes und ein zweites Abdeckelement, die geeignet sind, zueinander komplementäre Anteile der Durchströmöffnung zu verschließen. Das erste Abdeckelement (17) ist dabei fest in der Durchströmöffnung angeordnet, während das zweite Abdeckelement (19) zwischen einer Offenstellung und einer Geschlossenstellung verstellbar ist. In der Offenstellung ist die Durchströmöffnung für das Durchströmen eines Fluids geöffnet, in der Geschlossenstellung ist die Durchströmöffnung gegen ein Durchströmen des Fluids zumindest in Richtung aus dem Gefährdungsbereich in den Sicherungsbereich verschlossen. Die Lüftungseinrichtung ist als modulare Kassette ausgebildet, das zweite Abdeckelement ist schwenkbar am Rahmen gelagert.

## Beschreibung

Die Erfindung betrifft eine Lüftungseinrichtung für eine elektrische Schaltanlage, insbesondere zum gasdichten Verschließen der Schaltanlage in einem Störlichtbogenfall. Die Lüftungseinrichtung umfasst eine durch einen Rahmen definierte Durchströmöffnung, die einen Gefährdungsbereich mit einem Sicherungsbereich verbindet, sowie ein erstes und ein zweites Abdeckelement, die geeignet sind, zueinander komplementäre Anteile der Durchströmöffnung zu verschließen. Das erste Abdeckelement ist dabei fest in der Durchströmöffnung angeordnet, während das zweite Abdeckelement zwischen einer Offenstellung und einer Geschlossenstellung verstellbar ist. In der Offenstellung ist die Durchströmöffnung für das Durchströmen eines Fluids geöffnet, in der Geschlossenstellung ist die Durchströmöffnung gegen ein Durchströmen des Fluids zumindest in Richtung aus dem Gefährdungsbereich in den Sicherungsbereich verschlossen.

Lüftungseinrichtungen dieser Art können beispielsweise in den Wänden eines Gehäuses einer elektrischen Schaltanlage angeordnet sein und dazu dienen, ein Durchströmen eines Gases, insbesondere Luft, in die oder aus der elektrischen Schaltanlage zu ermöglichen, um die Schaltanlage bei normalem Betrieb ausreichend zu belüften. Gerade bei elektrischen Schaltanlagen kann es jedoch unter Umständen zu einem Störlichtbogenfall kommen, bei dem durch einen ungewollten Spannungsüberschlag ein Lichtbogen innerhalb der Schaltanlage entsteht. Abhängig von der Intensität des Lichtbogens entstehen dabei hohe Temperaturen und hohe Drücke, die für Objekte und Personen im Umfeld der Schaltanlage gefährlich werden können, wenn etwa heißes Gas aus der Schaltanlage tritt.

In einem derartigen Störlichtbogenfall ist es daher wichtig, den Bereich, in dem der Störlichtbogen auftritt, gegenüber anderen Bereichen, die gegen schädliche Einwirkungen des Temperatur- oder Druckanstiegs gesichert werden sollen, zuverlässig abzugrenzen. Grundsätzlich können innerhalb der elektrischen Schaltanlage voneinander mit Wänden getrennte Schotträume vorgesehen sein; zudem ist das Innere der Schaltanlage durch das Gehäuse der Schaltanlage gegenüber der Umgebung abgegrenzt. Allerdings sind zum eingangs genannten Zweck der Belüftung in der Regel in den Wänden der Schaltanlage Öffnungen vorgesehen, so dass die Abgrenzung nicht vollständig ist.

Um zugleich einerseits bei normalem Betrieb eine ausreichende Belüftung der elektrischen Schaltanlage zu ermöglichen und andererseits im Störlichtbogenfall den vor Schädigungen zu bewahrenden Bereich (Sicherungsbereich) von dem Bereich zu trennen, von dem aus aufgrund des Störlichtbogens Gefahr ausgeht (Gefährdungsbereich), ist es bekannt, Rückschlagklappen und Jalousien in den Öffnungen der Schaltanlage vorzusehen. Bekannte derartige Lüftungseinrichtungen müssen jedoch in der Regel durch eine zusätzliche Auslöseeinrichtung aus ihrer normalen Offenstellung in die Geschlossenstellung überführt werden, was einen hohen Kosten- und konstruktiven Aufwand bedingt. Andere bekannte Lüftungseinrichtungen können ohne Auslöseeinrichtung auskommen; beispielsweise können derartige passive Lüftungseinrichtungen durch den Druck des Störlichtbogens selbst zum Schließen gebracht werden. Dabei wird in der Regel davon ausgegangen, dass der vom Störlichtbogen verursachte Druck senkrecht auf die Lüftungseinrichtung wirkt. Die Druckausbreitungsrichtung des Gases ist jedoch nur schwer vorhersagbar und kann daher sehr undefiniert sein, so dass gängige Lüftungseinrichtungen in ihrer Zuverlässigkeit eingeschränkt sein können, wenn Gasdruck auch seitlich auf die Lüftungseinrichtung einwirkt. Ferner können bekannte Lüftungseinrichtungen oftmals nicht in beliebiger Ausrichtung in Wände der Schaltanlage eingesetzt werden, da ihr Öffnungszustand und ihre Funktionsfähigkeit von der Schwerkraft beeinflusst sein können.

Es ist die Aufgabe der Erfindung, eine Lüftungseinrichtung der eingangs genannten Art bereitzustellen, die bei normalem Betrieb der elektrischen Schaltanlage eine ausreichende Belüftung der Schaltanlage ermöglicht und im Störlichtbogenfall auch bei undefinierter Druckausbreitungsrichtung zuverlässig und auf konstruktiv einfache sowie kostengünstige Weise den Gefährdungsbereich gegenüber dem Sicherungsbereich verschließt.

Die Aufgabe wird gelöst durch eine Lüftungseinrichtung mit den Merkmalen des Anspruchs 1 und insbesondere dadurch, dass die Lüftungseinrichtung als modulare Kassette ausgebildet ist, an deren einer Seite das zweite Abdeckelement schwenkbar an dem Rahmen gelagert ist.

Durch die Ausbildung als modulare Kassette ist die Lüftungseinrichtung als Baugruppe unabhängig und kann daher auf einfache Weise mehrfach in einer Ebene angeordnet werden. Insbesondere können sowohl schmale als auch breite bzw. tiefe Schaltfelder leicht mit solchen modularen Kassetten ausgestattet werden. Aufgrund der Modularität sind erfindungsgemäße Lüftungseinrichtungen also in bedarfsgerechter Anzahl in allen gängigen Schaltfeldvarianten wirtschaftlich einsetzbar, sowohl in einer Zuluftanordnung als auch in einer Abluftanordnung. Die modularen Kassetten können direkt im Schaltfeld an einzelnen Schotträumen wie z.B. einem Kabelanschlussraum sowie in einer schaltfeldübergreifenden Anlageneinhausung eingesetzt werden.

Vorteilhafte Ausführungsformen der Erfindung sind in der Beschreibung, den Zeichnungen sowie den abhängigen Ansprüchen beschrieben.

An den Seiten des Rahmens können Gasführungswände vorgesehen sein, die sich vom Rahmen aus im Wesentlichen senkrecht zur Durchströmrichtung erstrecken.

Es ist bevorzugt, dass an derjenigen Seite des Rahmens, an welcher das zweite Abdeckelement schwenkbar gelagert ist, keine Gasführungswand vorgesehen ist. Mit anderen Worten ist vorzugsweise die durch den Rahmen der Lüftungseinrichtung definierte Durchlassöffnung nicht ringsum von Gasführungswänden umgeben, sondern zumindest an einer Seite ist keine Gasführungswand vorgesehen. Dadurch, dass das zweite Abdeckelement an jener Seite des Rahmens, an der keine Gasführungswand vorgesehen ist, schwenkbar gelagert ist, ist das zweite Abdeckelement an dieser Seite, beispielsweise über ein oder mehrere Scharniere, an dem Rahmen angeordnet. Obwohl an dieser Seite keine Gasführungswand das Gas an einem seitlichen Eindringen in den Bereich zwischen das erste und das zweite Abdeckelement hindert, kann somit das Gas dennoch nicht direkt in diesen Bereich eindringen, sondern muss wegen der genannten Anordnung des zweiten Abdeckelements an dem Rahmen auch mit seinen seitlich einströmenden Anteilen durch das zweite Abdeckelement hindurchströmen, um die Lüftungseinrichtung passieren zu können.

Es kann auf diese Weise gezielt zugelassen werden, dass im Störlichtbogenfall heißes Gas nicht lediglich senkrecht, sondern aufgrund des undefinierten Drucks auch seitlich zu der Durchströmöffnung vordringen kann. Seitliche Druckanteile können somit gezielt kanalisiert werden, so dass sowohl senkrechte als auch seitliche Druckanteile auf definierte Weise auf die Lüftungseinrichtung einwirken. Bevorzugt kann das zweite Abdeckelement in seiner Offenstellung gerade derart ausgerichtet sein, dass die Überlagerung der senkrecht und der seitlich einwirkenden Anteile des aufgrund der erfindungsgemäßen Anordnung der Gasführungswände gezielt geführten heißen Gases zusammen besonders geeignet auf das zweite Abdeckelement einwirken, um dieses zuverlässig aus der Offenstellung in die Geschlossenstellung zu überführen.

Bei einer derartigen Ausgestaltung kann im Störlichtbogenfall zusätzlich zu dem senkrechten Druck auch der von der einen Seite des Rahmens auf das zweite Abdeckelement einwirkende Druck dazu beitragen, dass das zweite Abdeckelement zum ersten Abdeckelement hin verschwenkt und dadurch aus seiner bei normalem Betrieb eingenommenen Offenstellung in die Geschlossenstellung verstellt wird. Die schwenkbare Anordnung des zweiten Abdeckelements an der Seite des Rahmens, an der keine Gasführungswand vorgesehen ist, ermöglicht es somit, auch bei undefinierter Druckrichtung im Störlichtbogenfall sowohl senkrechte als auch seitliche Druckanteile vorteilhafterweise für ein zuverlässiges passives Verschließen der Lüftungseinrichtung zu nutzen.

Bei einer vorteilhaften Ausführungsform kann der Rahmen im Wesentlichen rechteckig sein und vier Seiten umfassen, wobei die Gasführungswände an drei der vier Seiten vorgesehen sind. Insbesondere können dann auch das erste und das zweite Abdeckelement den Ausmaßen des Rahmens entsprechend ebenfalls rechteckig sein. Bei einer rechteckigen Ausführung lässt sich die Lüftungseinrichtung besonders gut an übliche für eine Belüftung geeignete Flächen in Wänden der elektronischen Schaltanlage anpassen.

Weiterhin ist es bevorzugt, wenn sich die Gasführungswände und das zweite Abdeckelement in seiner Offenstellung von dem Rahmen aus in den Gefährdungsbereich hinein erstrecken. Das im Störlichtbogenfall gegebenenfalls heiße Gas, das zur Vermeidung von Schädigungen nicht aus dem Gefährdungsbereich in den Sicherungsbereich austreten soll und dessen Druck zugleich ausgenutzt wird, um das zweite Abdeckelement aus der Offenstellung in die Geschlossenstellung zu verstellen, wirkt von der Gefährdungsseite aus auf die Lüftungseinrichtung ein und droht, von der Gefährdungsseite aus durch diese auszutreten. Daher ist es vorteilhaft, die Gasführungswände, die das Gas und dessen Druck kanalisieren sollen, sowie das zweite Abdeckelement, das durch den Druck in die Geschlossenstellung verschwenkt werden soll, auf derjenigen Seite der Durchströmöffnung vorzusehen, die dem Gefährdungsbereich zugewandt ist.

Gemäß einer weiteren vorteilhaften Ausführungsform sind das erste und das zweite Abdeckelement im Wesentlichen als gleichartige Platten ausgebildet, die jeweils eine Vielzahl, insbesondere länglicher, Öffnungen aufweisen, wobei die Öffnungen des zweiten Abdeckelements an Stellen vorgesehen sind, an denen beim ersten Abdeckelement keine Öffnungen vorgesehen sind, und umgekehrt. Die Ausbildung der ersten und zweiten Abdeckelemente als gleichartige Platten stellt eine konstruktiv besonders einfache Möglichkeit der Herstellung dar. Die Platten mit den genannten entsprechenden Öffnungen können beispielsweise aus Blech sein und auf einfache Weise durch Abkanten, Stanzen und/oder Schneiden ausgebildet werden. Um einerseits sicherzustellen, dass, wenn das zweite Abdeckelement in seiner Offenstellung ist, möglichst viel Gas durch die Durchströmöffnung der Lüftungseinrichtung strömen kann, sind eine Vielzahl von Öffnungen in den beiden Abdeckelementen vorgesehen; um andererseits sicherzustellen, dass, wenn das zweite Abdeckelement in seiner Geschlossenstellung ist, die beiden Abdeckelemente die Durchströmöffnung der Lüftungseinrichtung zuverlässig gasdicht verschließen, können die Öffnungen in dem einen Abdeckelement gerade komplementär zu den Öffnungen in dem anderen Abdeckelement angeordnet sein, so dass also Zwischenbereiche zwischen den Öffnungen (z.B. Stege) des einen Abdeckelements gerade auf Öffnungen des anderen Abdeckelements treffen.

Wenn die Platten im Wesentlichen gleichartig ausgerichtet aneinander anliegen, wie es insbesondere in der Geschlossenstellung des zweiten Abdeckelements der Fall ist, sind sie folglich geeignet, die Durchströmöffnung der Lüftungseinrichtung vollständig auszufüllen und somit zu verschließen. Ein einzelnes der Abdeckelemente hingegen verschließt die Durchströmöffnung nur zu einem Teil und lässt bevorzugt einen möglichst großen Teil für das Durchströmen von Gas, insbesondere Luft, zur Belüftung der Schaltanlage frei. Vorteilhafterweise können die Öffnungen in den Abdeckelementen nahezu 50% der Fläche des jeweiligen Abdeckelements ausmachen, insbesondere etwa 40%, vorzugsweise zumindest 30%. Die Form der Öffnungen kann dabei rechteckig, rund oder auf vielfältige andere Weise geformt sein. Eine längliche Form der Öffnungen ist insofern vorteilhaft, als sie beispielsweise eine zwischen den beiden Abdeckelementen alternierende Anordnung der Öffnungen ermöglicht, die im Wesentlichen die gesamte Fläche der Durchströmöffnung der Lüftungseinrichtung ausfüllen kann.

Bei einer bevorzugten Ausführungsform ist das zweite Abdeckelement geeignet, durch einen gegenüber einem Druck im Sicherungsbereich hohen Druck im Gefährdungsbereich von der Offenstellung in die Geschlossenstellung verstellt zu werden. Ein derartiger Druckunterschied zwischen dem Gefährdungsbereich und dem Sicherungsbereich kann insbesondere aufgrund eines Störlichtbogenfalls entstehen und dazu führen, dass gegebenenfalls sehr heißes Gas durch die Lüftungseinrichtungen in den Sicherungsbereich auszutreten droht. Dazu müsste das Gas aufgrund der Gasführungswände und der Anordnung des zweiten Abdeckelements an der freien Seite des Rahmens durch die Öffnungen des zweiten und des ersten Abdeckelements hindurchströmen. Wegen des hohen Drucks aber drückt das Gas gezielt geführt durch die Gasführungswände derart auf das zweite Abdeckelement, dass das zweite Abdeckelement aus seiner Offenstellung in die Geschlossenstellung verschwenkt wird. Somit wird der den Sicherungsbereich gefährdende hohe Druck selbst dazu genutzt, das Austreten des heißen Gases zu verhindern.

Vorzugsweise umfasst die Lüftungseinrichtung zumindest ein überwindbares Schwellenelement, welches das zweite Abdeckelement gegen ein Verstellen von der Offenstellung in die Geschlossenstellung sichert und geeignet ist, durch einen gegenüber einem Druck im Sicherungsbereich hohen Druck im Gefährdungsbereich überwunden zu werden. Das Schwellenelement kann vorteilhafterweise dazu verwendet werden, das zweite Abdeckelement in seiner Offenstellung zu halten und so gegen ein unbeabsichtigtes Verstellen in die Geschlossenstellung, beispielsweise bei normalem Betrieb der Schaltanlage, in dem maximale Belüftung gewährleistet sein soll, zu sichern.

Das Vorsehen eines Schwellenelements kann insbesondere die Ausrichtung der Lüftungseinrichtung in beliebiger Lage an der elektronischen Schaltanlage ermöglichen. Ohne das Schwellenelement könnte nämlich je nach Ausrichtung der Lüftungseinrichtung das zweite Abdeckelement beispielsweise aufgrund von Schwerkraft auch bei normalem Betrieb in die Geschlossenstellung verstellt werden. Gegen ein solches unbeabsichtigtes Verstellen ist das zweite Abdeckelement aber durch das Schwellenelement blockiert. Diese Blockade ist jedoch vorteilhafterweise genau in dem Fall überwindbar, wenn, insbesondere in einem Störlichtbogenfall, ein bestimmter Druckunterschied zwischen dem Gefährdungsbereich und dem Sicherungsbereich überschritten wird. Durch geeignete Wahl des Schwellenelements, beispielsweise seiner Form, seines Materials und/oder seiner Anordnung, kann ein gewünschter Schwellenwert für den Druckunterschied eingestellt werden, ab dem das Schwellenelement überwunden werden kann. Das Überwinden des Schwellenelements kann irreversibel, beispielsweise aufgrund von Beschädigung des Schwellenelements, erfolgen oder aber reversibel sein, beispielsweise nach Art einer Rastung.

Weiterhin ist es vorteilhaft, wenn die Lüftungseinrichtung zumindest ein Rastelement umfasst, welches geeignet ist, das zweite Abdeckelement nach einem Verstellen in die Geschlossenstellung in der Geschlossenstellung zu blockieren. Bei dem Rastelement kann es sich beispielsweise um eine Rastzunge handeln, die leicht überwindbar ist und das zweite Abdeckelement hintergreift, nachdem dieses seine Geschlossenstellung erreicht hat. Das Blockieren des zweiten Abdeckelements in seiner Geschlossenstellung dient dem zusätzlich verbesserten Schutz des Sicherungsbereiches vor austretendem Gas aus dem Gefährdungsbereich. Wenn im Störlichtbogenfall nämlich der Druck im Gefährdungsbereich wieder absinkt, könnte das zweite Abdeckelement beispielsweise aufgrund von Schwerkraft die Geschlossenstellung wieder verlassen und die Durchströmöffnung für ein Austreten von gegebenenfalls weiterhin sehr heißen Gasen öffnen, was durch das Rastelement verhindert werden kann. Ferner kann durch das fortdauernde Verschließen der Lüftungseinrichtung auch verhindert werden, dass umgekehrt Luft aus dem Sicherungsbereich in den Gefährdungsbereich eindringt. Dadurch kann vermieden werden, dass gegebenenfalls ein Feuer in dem Gefährdungsbereich aufgrund von Sauerstoffzufuhr noch verstärkt wird.

Bei einer weiteren Ausführungsform weist die Lüftungseinrichtung zumindest ein Halteelement auf, welches das zweite Abdeckelement in der Offenstellung gegenüber einem Verstellen aufgrund von Schwerkraft sichert. Bei dem Halteelement kann es sich um das genannte Schwellenelement handeln, es kann jedoch auch ein gesondertes Halteelement vorgesehen sein. Das Halteelement kann insbesondere nicht überwindbar sein. In diesem Fall blockiert das Halteelement nicht ein Verstellen des zweiten Abdeckelements aus der Offenstellung in die Geschlossenstellung sondern ein Verstellen in die Gegenrichtung aus der Offenstellung in eine undefinierte andere Stellung, die insbesondere einer zu weit geöffneten Stellung entsprechen kann, in der ein zuverlässiges selbsttätiges Schließen der Lüftungseinrichtung nicht mehr gewährleistet werden könnte. Auf diese Weise trägt das Halteelement zum zuverlässigen Funktionieren der Lüftungseinrichtung bei. Ferner ermöglicht es eine relativ zur Wirkung der Schwerkraft beliebige Ausrichtung der Lüftungseinrichtung ohne Beeinträchtigung von deren Funktion.

Bei einer weiteren vorteilhaften Ausführungsform ist das zweite Abdeckelement in der Offenstellung gegenüber dem ersten Abdeckelement in einen Winkel zwischen 5° und 60° ausgerichtet, vorzugsweise zwischen 7° und 45°, insbesondere zwischen 10° und 30°, insbesondere etwa 15°. Durch geeignete Wahl des Winkels zwischen dem zweiten Abdeckelement in seiner Offenstellung und dem ersten Abdeckelement kann die Durchströmöffnung der Lüftungseinrichtung gerade so stark geöffnet sein, dass vorteilhafterweise einerseits eine gute Belüftung des Innenraums der elektrischen Schaltanlage ermöglicht wird und andererseits im Störlichtbogenfall das aufgrund des hohen Drucks schnell strömende Gas derart auf zweite Abdeckelement einwirkt, dass die Durchströmöffnung der Lüftungseinrichtung schnell und zuverlässig verschlossen wird. Insbesondere können der Winkel zwischen dem zweiten Abdeckelement in seiner Offenstellung und dem ersten Abdeckelement sowie das Maß, um das sich die Gasführungswände von dem Rahmen der Lüftungseinrichtung aus in den Gefährdungsbereich erstrecken, aufeinander abgestimmt sein. Beispielsweise können sich die Gasführungswände und das zweite Abdeckelement in seiner Offenstellung im Wesentlichen gleich weit in den Gefährdungsbereich hinein erstrecken, so dass die Gasführungswände im Wesentlichen gerade den Bereich zwischen den dem ersten und dem zweiten Abdeckelement seitlich abschließen. Somit können die Gasführungswände an drei Seiten des Rahmens ein Eindringen von Gas zwischen das erste und das zweite Abdeckelement zuverlässig verhindern und das Gas stattdessen zu einem Durchströmen durch die Öffnungen des zweiten Abdeckelements von der vierten Seite des Rahmens aus oder senkrecht auf die Durchströmöffnung zu zwingen.

Bei einer weiteren vorteilhaften Ausführungsform ist vorgesehen, dass die Lüftungseinrichtung einen Berührungsschutz umfasst, der ein Berühren zumindest der Abdeckelemente von dem Sicherungsbereich aus verhindert. Der Berührungsschutz kann insbesondere im Wesentlichen dieselben Ausmaße wie der Rahmen der Lüftungseinrichtung aufweisen und von der Sicherungsseite der Lüftungseinrichtung aus auf den Rahmen aufgesetzt sein. Der Berührungsschutz kann auf diese Weise dazu dienen, zu verhindern, dass sensible Bestandteile der Lüftungseinrichtung, also insbesondere das schwenkbare zweite Abdeckelement berührt und möglicherweise in ihrer Funktion beeinträchtigt werden. Zudem kann der Berührungsschutz auch dazu dienen, ein Eindringen von Fremdkörpern wie Schmutz, insbesondere zwischen das erste und zweite Abdeckelement, zu verhindern, wodurch ansonsten ebenfalls die Funktionsfähigkeit der Lüftungseinrichtung gefährdet werden könnte. Auf diese Weise kann der Berührungsschutz zur Sicherheit der Lüftungseinrichtung beitragen.

Im Folgenden wird die Erfindung anhand der in den Figuren gezeigten Ausführungsformen weiter erläutert.
- Fig. 1A und 1B: zeigen eine Ausführungsform einer erfindungsgemäßen Lüftungseinrichtung in einer perspektivischen und teilweise transparenten Ansicht, wobei das zweite Abdeckelement in Fig. 1A in seiner Offenstellung und in Fig. 1B in seiner Geschlossenstellung dargestellt ist.
- Fig. 2A und 2B: zeigen eine beispielhafte elektrische Schaltanlage mit drei erfindungsgemäßen Lüftungseinrichtungen in einem schematischen seitlichen Querschnitt, wobei die jeweiligen zweiten Abdeckelemente in Fig. 2A in ihrer Offenstellung und in Fig. 2B in ihrer Geschlossenstellung dargestellt sind.

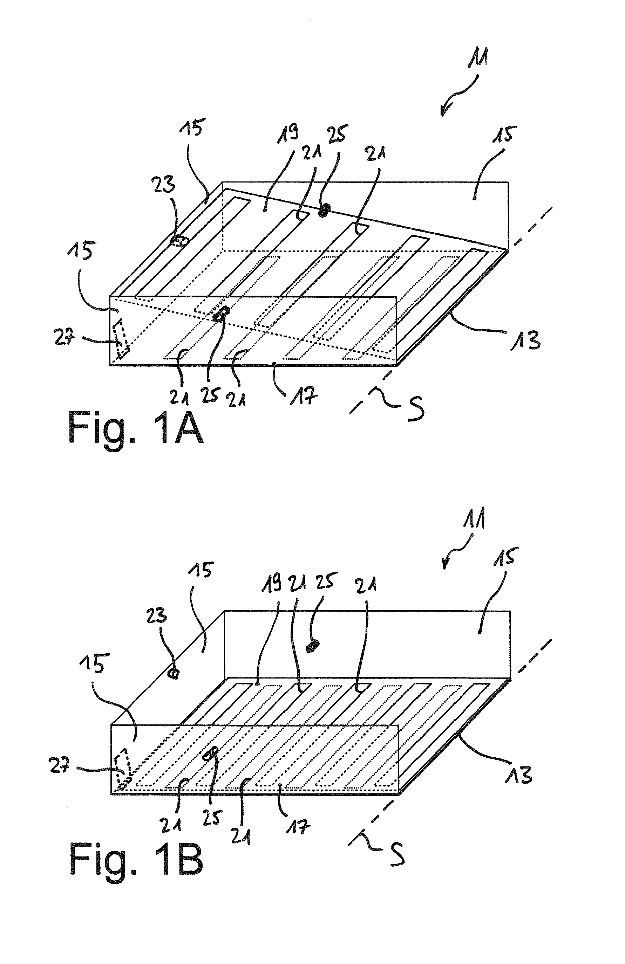

Die in den Fig. 1A und 1B abgebildete Lüftungseinrichtung 11 umfasst einen Rahmen 13, der im Wesentlichen rechteckig ist und eine Durchströmöffnung definiert. An drei Seiten des Rahmens 13 (in der gezeigten perspektivischen Darstellung: vorne, links und hinten) erstrecken sich Gasführungswände 15 im Wesentlichen senkrecht nach oben, was einer Ausrichtung hin zum Gefährdungsbereich entspricht. An der vierten Seite des Rahmens 13 ist keine derartige Gasführungswand 15 vorgesehen.

Fest an dem Rahmen 13 angeordnet und mit diesem an seinen vier Seiten verbunden befindet sich ein erstes Abdeckelement 17, das als im Wesentlichen rechteckige in Blechabkanttechnik gefertigte Platte ausgebildet ist. Über dem ersten Abdeckelement 17 und zwischen den Gasführungswänden 15 ist ein dem ersten Abdeckelement 17 im Wesentlichen entsprechend ausgebildetes zweites Abdeckelement 19 angeordnet, das an der Seite des Rahmens 13, an der keine Gasführungswand 15 vorgesehen ist (rechts) mittels nicht dargestellter Lagerelemente, beispielsweise Scharniere, um eine Schwenkachse S schwenkbar an dem Rahmen 13 gelagert ist. Die beiden Abdeckelemente 17, 19 weisen jeweilige Öffnungen 21 auf, die als zueinander seitlich versetzte längliche und im Wesentlichen rechteckige Streifen ausgebildet sind.

In der in Fig. 1A gezeigten Offenstellung des zweiten Abdeckelements 19 liegen das erste und das zweite Abdeckelement 17, 19 lediglich im Bereich der Seite des Rahmens 13, an der das zweite Abdeckelement 19 schwenkbar gelagert ist, aneinander an. Daher sind die jeweiligen Öffnungen 21 der Abdeckelemente 17, 19 nicht durch jeweilige verschlossene Abschnitte des jeweils anderen Abdeckelements 17, 19 verschlossen. Somit ist es für ein Gas möglich, durch die Durchströmöffnung der Lüftungseinrichtung 11 weitgehend ungehindert hindurchzuströmen. In der in Fig. 1A gezeigten Offenstellung des zweiten Abdeckelements 19 ist dieses gegenüber der in Fig. 1B gezeigten Geschlossenstellung um einen Winkel von etwa 15° verschwenkt. Dadurch erstreckt sich das zweite Abdeckelement 19 in dieselbe Richtung wie die Gasführungswände 15 und etwa um dasselbe Maß wie diese von dem Rahmen 13 aus in den Gefährdungsbereich hinein.

In der in Fig. 1B gezeigten Geschlossenstellung des zweiten Abdeckelements 19 liegen das erste und das zweite Abdeckelement 17, 19 aneinander an, wodurch die jeweiligen Öffnungen 21 des einen Abdeckelements 17, 19 an verschlossenen Abschnitten zwischen den Öffnungen 21 des jeweils anderen Abdeckelements 17, 19 anliegen. Auf diese Weise werden in der gezeigten Geschlossenstellung des zweiten Abdeckelements 19 sämtliche Öffnungen 21 durch das jeweils andere Abdeckelement 17, 19 verschlossen, so dass insgesamt die Durchströmöffnung der Lüftungseinrichtung 11 gasdicht verschlossen ist.

Die drei Gasführungswände 15 verhindern, dass Gas aus dem Gefährdungsbereich seitlich in den Bereich zwischen dem ersten Abdeckelement 17 und dem zweiten Abdeckelement 19 in dessen Offenstellung eindringen kann. Dadurch, dass an der vierten Seite des Rahmens 13 das zweite Abdeckelement direkt an dem Rahmen 13 nahe dem ersten Abdeckelement 17 gelagert ist, kann auch von dieser Seite aus kein Gas in den Bereich zwischen dem ersten und dem zweiten Abdeckelement 17, 19 eindringen. Ein Passieren der Durchströmöffnung der Lüftungseinrichtung 11 ist somit nur dadurch möglich, dass Gas durch die Öffnungen 21 des ersten und des zweiten Abdeckelements 17, 19 dringt. Die erfindungsgemäße Ausführung gewährleistet somit ein gezieltes Führen des Gases auch bei undefinierten Druckausbreitungsrichtungen im Störlichtbogenfall. Vorteilhafterweise werden dabei nicht nur senkrechte Anteile des Drucks, sondern auch über die Seite des Rahmens 13 ohne Gasführungswand 15 seitliche Anteile des Drucks zu dem zweiten Abdeckelement 19 geführt, so dass dieses im Falle eines hohen Drucks zuverlässig aus seiner Offenstellung in die Geschlossenstellung überführt wird. Die schwenkbare Lagerung des zweiten Abdeckelements 19 stellt dabei eine konstruktiv besonders einfache und zuverlässige Weise dar, das zweite Abdeckelement 19 zwischen seiner Offenstellung, in der eine umfassende Belüftung möglich ist, und seiner Geschlossenstellung, in der die Durchströmöffnung der Lüftungseinrichtung 11 verschlossen ist, beweglich zu lagern. Durch die schwenkbare Lagerung kann auf Führungselemente zum Führen des zweiten Abdeckelements 19 zwischen seiner Offenstellung und seiner Geschlossenstellung verzichtet werden.

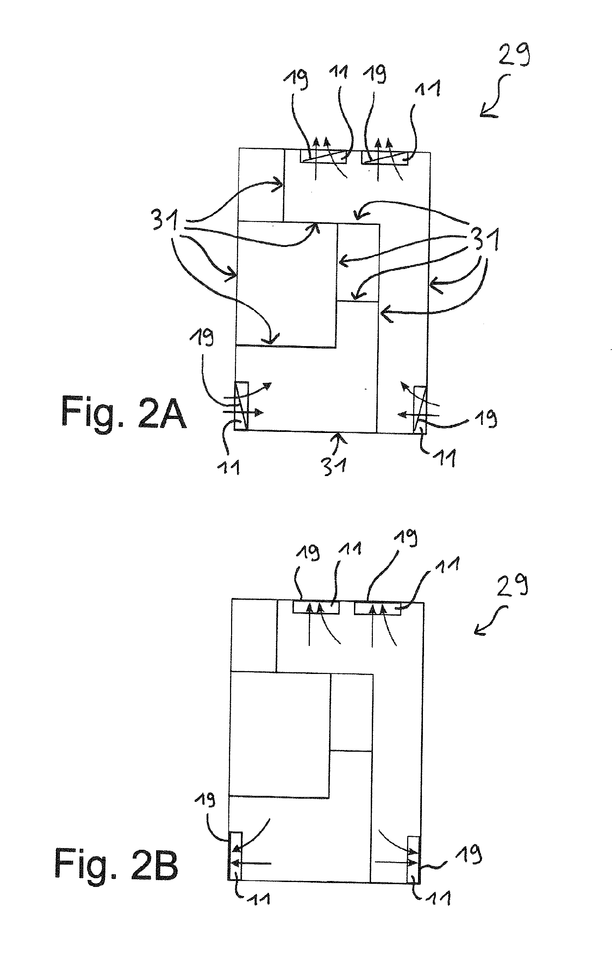

Die Lüftungseinrichtung 11 wird vorzugsweise derart in eine Wand einer elektrischen Schaltanlage 29 (Fig. 2A und 2B; in Fig. 1A und 1B nicht gezeigt) eingebaut, dass die Richtung, in die sich das zweite Abdeckelement 19 und die Gasführungswand 15 erstrecken (in der Darstellung: oben), in den Innenraum der Schaltanlage 29 weist, der in der Regel dem Gefährdungsbereich entspricht und durch die Wand und von dem Sicherungsbereich außerhalb der Schaltanlage 29 abgegrenzt ist.

Die in den Fig. 1A und 1B gezeigte Ausführungsform weist ein Schwellenelement 23 auf, das an der Gasführungswand 15 an derjenigen Seite des Rahmens 13 angeordnet ist, die der Seite gegenüberliegt, an der das zweite Abdeckelement 19 schwenkbar gelagert ist. Das Schwellenelement 23 sichert das zweite Abdeckelement 19 gegen ein unbeabsichtigtes Verstellen von der Offenstellung in die Geschlossenstellung, beispielsweise aufgrund von Schwerkraft. Zudem sind an den beiden weiteren seitlichen Gasführungswänden 15 jeweilige Halteelemente 25 vorgesehen, die ein weiter öffnendes Verschwenken des zweiten Abdeckelements 19 in Richtung des Gefährdungsbereichs (in der gezeigten Ausrichtung: nach oben) verhindern, so dass die Lüftungseinrichtung 11 etwa auch in der in den Fig. 2A und 2B gezeigten Ausrichtung mit nach unten weisenden Gasführungswänden 15 und zweitem Abdeckelement 19 angeordnet werden kann, ohne dass das zweite Abdeckelement 19 weiter als in die gezeigte Offenstellung aufschwenken könnte.

Das Schwellenelement 23 ist abhängig von der Kraft, die darauf einwirkt, überwindbar. Wenn aufgrund eines im Vergleich zu dem Druck im Sicherungsbereich hohen Drucks im Gefährdungsbereich Gas mit hoher Geschwindigkeit durch die Öffnungen 21 des zweiten Abdeckelements 19 dringt, wird dadurch das zweite Abdeckelement 19 in Richtung des ersten Abdeckelements 17 gedrückt. Überschreitet diese Kraft einen Schwellenwert, auf den das Schwellenelement ausgelegt ist, kann dieses überwunden werden, beispielsweise indem es bricht, so dass das zweite Abdeckelement 19 für ein Verstellen in die in Fig. 1B gezeigte Geschlossenstellung freigegeben ist.

Die gezeigte Ausführungsform der Lüftungseinrichtung 11 umfasst weiterhin ein Rastelement 27, das als eine an einer der Gasführungswände 15 angeordnete Rastzunge ausgebildet ist. Beim Verstellen des zweiten Abdeckelements 19 aus der Offenstellung in die Geschlossenstellung kann es in diese Richtung an dem Rastelement 27 vorbeigeführt werden, wobei die in diese Richtung zu überwindende Kraft vorteilhafterweise geringer ist als die Kraft, bei der das Schwellenelement überwindbar ist. Mit Erreichen der Geschlossenstellung durch das zweite Abdeckelement 19 hintergreift das Rastelement 27 das zweite Abdeckelement 19 und blockiert dessen Verstellen aus der Geschlossenstellung heraus. Somit wird auch nach einem Druckabfall im Gefährdungsbereich das Austreten von möglicherweise schädigenden Gasen aus dem Gefährdungsbereich in den Sicherungsbereich verhindert.

Die in den Fig. 2A und 2B in einem seitlichen Querschnitt gezeigte elektrische Schaltanlage 29 weist in Schotträume unterteilte Bereiche für eine Vielzahl elektrischer Komponenten auf. In einem hinteren Bereich (in der gezeigten Darstellung: links und rechts) und einem oberen Bereich der Schaltanlage 29 sind in Wänden der Schaltanlage 29 jeweilige erfindungsgemäße Lüftungseinrichtungen 11 vorgesehen. Die Lüftungseinrichtungen 11 bilden ein Belüftungssystem, wobei die hinten angeordneten Lüftungseinrichtungen 11 für Zuluft vorgesehen sind und die an einer Decke der Schaltanlage 29 angeordneten Lüftungseinrichtungen 11 für die Abluft vorgesehen sind. Somit kann Luft durch die untere Lüftungseinrichtung 11 in die elektrische Schaltanlage 29 eindringen und diese belüften. Die Luft kann dann innerhalb der Schaltanlage 29, beispielsweise durch einen rückwärtigen Freiraum, strömen und sich insbesondere aufwärmen, wodurch sie nach oben steigt. Durch die zur Abluft vorgesehenen Lüftungseinrichtungen 11 kann die Luft dann wieder aus der Schaltanlage 29 austreten. Insbesondere können die Lüftungseinrichtungen 11 an der Außenseite der Schaltanlage 29 mit Zuluft- bzw. Abluftkanälen (nicht gezeigt) verbunden sein. Es ist darauf hinzuweisen, dass bei Bedarf an weiteren Positionen in der Schaltanlage 29 Lüftungseinrichtungen 11 angeordnet sein können, wie in Fig. 2B durch 31 gekennzeichnet ist.

Die Lüftungseinrichtungen 11 sind so ausgerichtet, dass ihre Gasführungswände 15 und die zweiten Abdeckelemente 19 ins Innere der Schaltanalage 29 gerichtet sind, das den Gefährdungsbereich darstellt, in dem ein Störlichtbogenfall auftreten kann. Wenn sich die zweiten Abdeckelemente 19 der Lüftungseinrichtungen 11, wie in Fig. 2A gezeigt, in ihrer Offenstellung befinden, kann Luft in beide Richtungen durch die jeweilige Durchströmöffnung der Lüftungseinrichtungen 11 durchströmen. Bei den der Zuluft dienenden unteren Lüftungseinrichtungen 11 kann Luft insbesondere aus dem Sicherungsbereich in den Gefährdungsbereich hinein (Pfeile), bei den der Abluft dienenden oberen Lüftungseinrichtungen 11 insbesondere aus dem Gefährdungsbereich hinaus (Pfeile) strömen.

In Fig. 2B sind die Lüftungseinrichtungen 11 mit ihren zweiten Abdeckelementen 19 in der Geschlossenstellung gezeigt, wie es etwas in oder nach einem Störlichtbogenfall der Fall sein kann. Aufgrund eines Störlichtbogens kann sich schlagartig Gas in der Schaltanlage 29 erhitzen und ausdehnen, so dass der Druck im Gefährdungsbereich im Inneren der Schaltanlage 29 gegenüber dem Druck im Sicherungsbereich außerhalb der Schaltanlage 29 stark zunimmt. Das heiße Gas strömt dann gegen die Lüftungseinrichtungen 11, durch deren Durchströmöffnungen es grundsätzlich austreten könnte. Jedoch wird das Gas aufgrund der erfindungsgemäßen Anordnung der Gasführungswände 15 und des jeweiligen zweiten Abdeckelements 19 derart geführt (Pfeile), dass durch den Druck des Gases selbst die zweiten Abdeckelemente 19 in ihre Geschlossenstellung verschwenkt werden und somit zusammen mit den ersten Abdeckelementen 17 die Durchströmöffnungen der Lüftungseinrichtungen 11 gegen ein Austreten des Gases aus dem Gefährdungsbereich im Inneren der Schaltanlage 29 in den Sicherungsbereich außerhalb der Schaltanlage 29 verschließen.

### Bezugszeichenliste

- 11: Lüftungseinrichtung
- 13: Rahmen
- 15: Gasführungswand
- 17: erstes Abdeckelement
- 19: zweites Abdeckelement
- 21: Öffnung
- 23: Schwellenelement
- 25: Halteelement
- 27: Rastelement
- 29: elektrische Schaltanalage
- 31: Position für weitere Lüftungseinrichtung

- S: Schwenkachse

## Patentansprüche

1. Lüftungseinrichtung (11) für eine elektrische Schaltanlage (29), insbesondere zum gasdichten Verschließen der Schaltanlage (29) in einem Störlichtbogenfall, mit einer durch einen Rahmen (13) definierten Durchströmöffnung, die einen Gefährdungsbereich mit einem Sicherungsbereich verbindet, sowie mit einem ersten und einem zweiten Abdeckelement (17, 19), die geeignet sind, zueinander komplementäre Anteile der Durchströmöffnung zu verschließen, wobei das erste Abdeckelement (17) fest in der Durchströmöffnung angeordnet ist und das zweite Abdeckelement (19) zwischen einer Offenstellung und einer Geschlossenstellung verstellbar ist, wobei in der Offenstellung die Durchströmöffnung für das Durchströmen eines Fluids geöffnet ist, wobei in der Geschlossenstellung die Durchströmöffnung gegen ein Durchströmen des Fluids zumindest in Richtung aus dem Gefährdungsbereich in den Sicherungsbereich verschlossen ist,
**dadurch gekennzeichnet, dass** die Lüftungseinrichtung (11) als modulare Kassette ausgebildet ist, an deren einer Seite das zweite Abdeckelement (19) schwenkbar an dem Rahmen (13) gelagert ist.

2. Lüftungseinrichtung (11) nach Anspruch 1,
**dadurch gekennzeichnet , dass** an den Seiten des Rahmens (13) Gasführungswände (15) vorgesehen sind, die sich vom Rahmen (15) aus im Wesentlichen senkrecht zur Durchströmöffnung erstrecken.

3. Lüftungseinrichtung (11) nach Anspruch 2,
**dadurch gekennzeichnet , dass** der Rahmen (13) im Wesentlichen rechteckig ist und vier Seiten umfasst, wobei die Gasführungswände (15) an drei der vier Seiten vorgesehen sind.

4. Lüftungseinrichtung (11) nach Anspruch 2 oder 3,
**dadurch gekennzeichnet , dass** sich die Gasführungswände (15) und das zweite Abdeckelement (19) in seiner Offenstellung von dem Rahmen (13) aus in den Gefährdungsbereich hinein erstrecken.

5. Lüftungseinrichtung (11) nach einem der Ansprüche 2 bis 4,
**dadurch gekennzeichnet , dass** an derjenigen Seite des Rahmens (13), an welcher das zweite Abdeckelement (19) schwenkbar gelagert ist, keine Gasführungswand (15) vorgesehen ist.

6. Lüftungseinrichtung (11) nach zumindest einem der vorstehenden Ansprüche,
**dadurch gekennzeichnet , dass** das erste und zweite Abdeckelement (17, 19) im Wesentlichen als gleichartige Platten ausgebildet sind, die jeweils eine Vielzahl, insbesondere länglicher, Öffnungen (21) aufweisen, wobei die Öffnungen (21) des zweiten Abdeckelements (19) an Stellen vorgesehen sind, an denen beim ersten Abdeckelement (17) keine Öffnungen (21) vorgesehen sind, und umgekehrt.

7. Lüftungseinrichtung (11) nach zumindest einem der vorstehenden Ansprüche,
**dadurch gekennzeichnet, dass** das zweite Abdeckelement (19) geeignet ist, durch einen gegenüber einem Druck im Sicherungsbereich hohen Druck im Gefährdungsbereich von der Offenstellung in die Geschlossenstellung verstellt zu werden.

8. Lüftungseinrichtung (11) nach zumindest einem der vorstehenden Ansprüche,
**dadurch gekennzeichnet, dass** sie zumindest ein überwindbares Schwellenelement (23) umfasst, welches das zweite Abdeckelement (19) gegen ein Verstellen von der Offenstellung in die Geschlossenstellung sichert und geeignet ist, durch einen gegenüber einem Druck im Sicherungsbereich hohen Druck im Gefährdungsbereich überwunden zu werden.

9. Lüftungseinrichtung (11) nach zumindest einem der vorstehenden Ansprüche,
**dadurch gekennzeichnet, dass** sie zumindest ein Rastelement (27) umfasst, welches geeignet ist, das zweite Abdeckelement (19) nach einem Verstellen in die Geschlossenstellung in der Geschlossenstellung zu blockieren.

10. Lüftungseinrichtung (11) nach zumindest einem der vorstehenden Ansprüche,
**dadurch gekennzeichnet , dass** sie zumindest ein Halteelement (25) aufweist, welches das zweite Abdeckelement (19) in der Offenstellung gegenüber einem Verstellen aufgrund von Schwerkraft sichert.

11. Lüftungseinrichtung (11) nach zumindest einem der vorstehenden Ansprüche,
**dadurch gekennzeichnet , dass** das zweite Abdeckelement (19) in der Offenstellung gegenüber dem ersten Abdeckelement (17) in einem Winkel zwischen 5° und 60° ausgerichtet ist, vorzugsweise zwischen 7° und 45°, insbesondere zwischen 10° und 30°, insbesondere etwa 15°.

12. Lüftungseinrichtung (11) nach zumindest einem der vorstehenden Ansprüche,
**dadurch gekennzeichnet , dass** sie einen Berührungsschutz umfasst, der ein Berühren zumindest der Abdeckelemente (17, 19) von dem Sicherungsbereich aus verhindert.
